(19)

Europäisches
Patentamt
European
Patent Office
Office européen
des brevets

(11) **EP 4 403 659 A1**

(12) **EUROPEAN PATENT APPLICATION**
published in accordance with Art. 153(4) EPC

(43) Date of publication:
**24.07.2024 Bulletin 2024/30**

(21) Application number: **22869621.7**

(22) Date of filing: **15.04.2022**

(51) International Patent Classification (IPC):
*C22C 38/00* (2006.01)      *C21D 9/46* (2006.01)
*C22C 38/34* (2006.01)      *C22C 38/60* (2006.01)
*C25F 1/06* (2006.01)

(52) Cooperative Patent Classification (CPC):
**C21D 9/46; C22C 38/00; C22C 38/34; C22C 38/60;
C25F 1/06;** Y02A 50/20; Y02T 10/12

(86) International application number:
**PCT/JP2022/017934**

(87) International publication number:
**WO 2023/042470 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2021   JP 2021151019**

(71) Applicant: **NIPPON STEEL Stainless Steel
Corporation
Tokyo 100-0005 (JP)**

(72) Inventors:
• **SAMPEI Satoshi
  Tokyo 100-8071 (JP)**
• **HAMADA Jun-ichi
  Tokyo 1000005 (JP)**
• **TERAOKA Shinichi
  Tokyo 100-8071 (JP)**
• **FUJIMURA Yoshitomo
  Tokyo 1000005 (JP)**

(74) Representative: **Vossius & Partner
Patentanwälte Rechtsanwälte mbB
Siebertstrasse 3
81675 München (DE)**

(54) **FERRITIC STAINLESS STEEL SHEET, AND METHOD FOR PRODUCING FERRITIC STAINLESS STEEL SHEET**

(57)      This ferritic stainless steel sheet contains, as a chemical composition, by mass%, C: more than 0% and 0.008% or less, Si: 0.01% to 2.50%, Mn: 0.01% to 0.50%, P: 0.0001% to 0.040%, S: 0.001% to 0.010%, Al: 0.001% to 2.500%, Cr: 10.0% to 25.0%, Nb: more than 0% and 0.80% or less, Ti: 0.05% to 0.50%, V: 0.01% to 0.15%, N: more than 0% and 0.050% or less, Ni: 0% to 0.40%, Sn: 0% to 0.200%, Mo: 0% to 1.40%, Cu: 0% to 1.40%, B: 0% to 0.0020%, Sb: 0% to 0.5%, Zr: 0% to 0.5%, Co: 0% to 0.5%, W: 0% to 0.5%, Ta: 0% to 0.100%, Mg: 0% to 0.0050%, Ca: 0% to 0.0050%, Ga: 0% to 0.05%, and REM: 0% to 0.1% with a remainder containing Fe and an impurity, in which, regarding a passive film present on a steel sheet surface, a composition parameter PS represented by a formula (1) is 0.03 or more and 0.15 or less, and a surface coverage of an Al-containing oxide having a circle-equivalent diameter of 0.01 to 1.0 $\mu$m in the passive film is 15% to 40%.

$$PS = Al/(Ti + Mn + Si + Cr) \qquad \cdots \qquad Formula\ (1)$$

Here, an element symbol in the formula (1) is a content (mass%) of each element at a depth position at which an Al amount is maximized in a depth direction of the passive film.

**(Cont. next page)**

# FIG. 1

**Description**

[Technical Field]

The present invention relates to a ferritic stainless steel sheet suitable as a material that is used in equipment such as devices that reduce NOx in exhaust gas using urea water, particularly, automotive urea selective catalytic reduction (SCR) systems in automotive exhaust gas treatment systems and a method for producing a ferritic stainless steel sheet.

Priority is claimed on Japanese Patent Application No. 2021-151019, filed September 16, 2021, the content of which is incorporated herein by reference.

[Background Art]

In countermeasures against environmental issues such as global warming, regulations on exhaust gases that are discharged mainly from transport equipment have become tight, and efforts are underway to suppress carbon dioxide emissions. For automobiles, in addition to efforts in terms of fuels, countermeasures such as a method for improving gas mileage by reducing vehicle body weights or reusing exhaust heat, exhaust gas recirculation (EGR) and the mounting of a diesel particulate filter (DPF) or an exhaust gas treatment device called a urea SCR have been adopted.

Among these, the urea SCR system is a purification device that is mounted in a series of exhaust systems with which high-temperature exhaust gas discharged from an engine is passed through an exhaust manifold or a catalytic converter and discharged to the atmosphere from a muffler. In the urea SCR system, urea is blown onto high-temperature, approximately 500°C, exhaust gas, the exhaust gas is decomposed by heat and moisture to generate ammonia, the ammonia and NOx are selectively reduced on a catalyst and decomposed into harmless nitrogen. Since treatment systems intended to reduce NOx are relatively easy to handle, studies are underway to apply those systems not only to automobiles but also to stationary NOx treatment systems.

In the urea SCR system, since high-temperature exhaust gas passes through the urea SCR system, exceptional oxidation resistance is required. In urea SCR systems, oxidation resistance in a water vapor atmosphere into which urea water has been blown is required rather than oxidation resistance to normal oxidation in the atmosphere.

In the case of ordinary ferritic stainless steel requiring oxidation resistance, even when ferritic stainless steel is heated for a long period of time in an atmosphere of approximately 500°C in the atmosphere, a dense protective film containing Cr as a main component is generated, an weight gain rarely occurs, and no oxide film peeling occurs, either.

However, even for the above-described ordinary ferritic stainless steel, in a water vapor atmosphere such as a portion where high-temperature exhaust gas of the urea SCR system passes through, not only be oxidation accelerated, but oxide film peeling also occurs. Therefore, in a case where the above-described ordinary ferritic stainless steel is used as a material a material for a urea SCR system, there have been cases where a catalyst in the urea SCR system is impaired.

Patent Literature 1 discloses, as ferritic stainless steel for a urea SCR component, a steel that satisfies not only steel components but also a predetermined formula of concentration fractions that is composed of the concentrations of Cr, Si, Al, Ti, Mn and Fe within 20 nm from a surface as a composition of a passive film. In Patent Literature 1, not only corrosion resistance in a urea aqueous solution but also oxidation resistance in a water vapor atmosphere are investigated.

As described above, for materials that are used in urea SCR systems, corrosion resistance and oxidation resistance in urea environments have been valued. Between these, for oxidation resistance, not only the component composition of a material but also the control of the passive film composition are important. In Patent Literature 1, a passive film having a predetermined composition is obtained by a final pickling treatment in which a cold-rolled steel sheet after annealing is pickled. That is, a passive film is formed by removing an oxide scale generated in an annealing step, which is a previous step, by a pickling step. However, the load in the pickling step is large, and there is a possibility that excess base material may melt by pickling, thereby causing a yield loss or an uneven surface luster. Therefore, there is demand for additional improvement in the production cost and the quality.

In addition, ferritic stainless steels having weather resistance and corrosion resistance that are improved by controlling a passive film in an annealing step or a pickling step are disclosed in Patent Literature 2 and Patent Literature 3.

However, in Patent Literature 2, the passive film is formed during pickling, and, as in Patent Literature 1, there is a concern that a high load may be necessary in the pickling step.

In addition, Patent Literature 3 discloses a technique for improving corrosion resistance in a heat exchanger with a film that is formed at 900°C to 1200°C in a special atmosphere. However, there is a concern that production cost may increase due to utilizing a high-temperature process.

In addition, it is needless to say that, in Patent Literature 3, water vapor oxidation resistance is not studied and there is room for improvement in terms of steam oxidation resistance.

As described above, since stainless steel sheets that are used in urea SCR systems are exposed to high-temperature exhaust gas atmospheres in water vapor atmospheres, exceptional steam oxidation resistance is strongly preferred.

However, conventional materials having preferable steam oxidation resistance as proposed thus far cause a large load in pickling steps and are not sufficient as a material configuring urea SCR systems from the viewpoint of stable productivity and production cost in some cases. That is, there has been a demand for a low-cost ferritic stainless steel sheet for urea SCR having satisfactory steam oxidation resistance.

[Citation List]

[Patent Literature]

[Patent Literature 1]
Japanese Unexamined Patent Application, First Publication No. 2012-112025
[Patent Literature 2]
Japanese Unexamined Patent Application, First Publication No. H05-271880
[Patent Literature 3]
Japanese Unexamined Patent Application, First Publication No. 2016-023341

[Summary of Invention]

[Technical Problem]

The present invention has been made in consideration of the above-described circumstances, and an object of the present invention is to provide a ferritic stainless steel sheet having exceptional steam oxidation resistance and a method for producing the same.

[Solution to Problem]

The present inventors conducted intensive studies in order to solve the above-described problems. As a result, it was found that, in order to develop exceptional steam oxidation resistance under an environment in which urea water is blown under a high-temperature environment of approximately 500°C (high-temperature water vapor environment), not only steel components but also the concentration distribution in a passive film on the steel surface and the coverage rate of an Al-containing oxide in the passive film are extremely important. In addition, it was found that, in order to obtain such a passive film, the optimization of conditions in a thermal treatment step and a pickling step are important.

Conventionally, a technique of adjusting the element concentration in a passive film of a ferritic stainless steel sheet by pickling or the like and improving oxidation resistance has been realized by controlling any one of a thermal treatment step or a pickling step. However, a technique of adjusting the element concentration in a passive film using both a thermal treatment step and a pickling step and improving steam oxidation resistance is not yet known.

It has been conventionally found that Al or Si is concentrated in a passive film by a thermal treatment step. However, an internal oxidation element such as Al or Si is removed by a subsequent pickling step. That is, there is no known technique for leaving Al or the like concentrated by a thermal treatment step in a final passive film. In addition, on the steel surface as thermally-treated obtained by skipping a pickling step, a Fe oxide is concentrated. In such stainless steel, there is a concern that the Fe oxide concentrated on the steel surface may create rust during the storage or transport of a product, accordingly, Al concentrated in a passive film may be eluted and the steam oxidation resistance may be degraded.

The present inventors found that, in ferritic stainless steel containing 10% or more of Cr, when the degree of concentration of Al among elements that concentrate in a passive film on the steel surface is controlled by a thermal treatment step and a pickling treatment, a robust passive film is formed and favorable steam oxidation resistance can be obtained.

In addition, in order to obtain a passive film for improving steam oxidation resistance, it is important to adjust the temperature and atmosphere of an annealing step, which is a step previous to the pickling step, and it is important to leave an oxide scale that is generated in the annealing step without removing all of the oxide scale in the pickling step.

The gist of the present invention is as described below.

[1] A ferritic stainless steel sheet according to one embodiment of the present invention containing, as a chemical composition, by mass%:

C: more than 0% and 0.008% or less,
Si: 0.01% to 2.50%,
Mn: 0.01% to 0.50%,
P: 0.0001% to 0.040%,
S: 0.001% to 0.010%,
Al: 0.001% to 2.500%,
Cr: 10.0% to 25.0%,
Nb: more than 0% and 0.80% or less,
Ti: 0.05% to 0.50%,
V: 0.01 % to 0.15%,
N: more than 0% and 0.050% or less,
Ni: 0% to 0.40%,
Sn: 0% to 0.200%,
Mo: 0% to 1.40%,
Cu: 0% to 1.40%,
B: 0% to 0.0020%,
Sb: 0% to 0.5%,
Zr: 0% to 0.5%,
Co: 0% to 0.5%,
W: 0% to 0.5%,
Ta: 0% to 0.100%,
Mg: 0% to 0.0050%,
Ca: 0% to 0.0050%,
Ga: 0% to 0.05%, and
REM: 0% to 0.1%
with a remainder containing Fe and an impurity,
in which, regarding a passive film present on a surface of a steel sheet, a composition parameter PS represented by a formula (1) is 0.03 or more and 0.15 or less, and
a surface coverage of an Al-containing oxide having a circle-equivalent diameter of 0.01 to 1.0 μm in the passive film is 15% to 40%.

$$PS = Al/(Ti + Mn + Si + Cr) \qquad \cdots \qquad \text{Formula (1)}$$

Here, an element symbol in the formula (1) is a content (mass%) of each element at a depth position at which an Al amount is maximized in a depth direction of the passive film.

[2] The ferritic stainless steel sheet according to [1] may further contain, in the chemical composition, by mass%, one or more selected from

Ni: 0.01% to 0.40%,
Sn: 0.001% to 0.200%,
Mo: 0.05% to 1.40%, and
Cu: 0.05% to 1.40%.

[3] The ferritic stainless steel sheet according to [1] or [2] may further contain, in the chemical composition, by mass%, one or more selected from

B: 0.0003% to 0.0020%,
Sb: 0.005% to 0.5%,
Zr: 0.005% to 0.5%,
Co: 0.005% to 0.5%,
W: 0.005% to 0.5%,
Ta: 0.005% to 0.100%,
Mg: 0.0001% to 0.0050%,
Ca: 0.0001% to 0.0050%,

Ga: 0.001% to 0.05%, and
REM: 0.001% to 0.1%.

[4] A method for producing a ferritic stainless steel sheet according to another embodiment of the present invention is a method for producing the ferritic stainless steel sheet according to any one of [1] to [3], in which a thermal treatment is performed with a dew point of an atmosphere set within a range of -50°C to -20°C, a soaking temperature set within a range of 700°C to 950°C and a soaking time set within a range of five seconds or longer and 10 minutes or shorter in a finish annealing step, and, subsequently, electrolytic pickling is performed.
[5] The method for producing a ferritic stainless steel sheet according to [4], in which a fluorine ion concentration in a solution that is used in the electrolytic pickling may be 1.0 to 10.0 g/L.

[Advantageous Effects of Invention]

According to the above-described embodiments of the present invention, it is possible to provide a ferritic stainless steel sheet having exceptional steam oxidation resistance and a method for producing the same.
In addition, the ferritic stainless steel sheet of the embodiment according to the present invention can be used as a material suitable for devices that reduce NOx in exhaust gas using urea water in internal combustion engines including a diesel engine as a main body (NOx reduction devices), particularly, equipment that is used in automotive urea SCR systems. In particular, the use of the ferritic stainless steel sheet of the embodiment according to the present invention as a material for components of urea SCR systems such as a tank, a pipe, a plate, a rod and a spring makes the simplification of urea SCR systems and cost saving possible.

[Brief Description of Drawings]

FIG. 1 is a view showing a relationship between a composition parameter PS of a passive film and an weight gain of a ferritic stainless steel sheet.
FIG. 2 is a view showing a relationship of a surface coverage of an Al-containing oxide and the weight gain of the steel sheet with respect to the composition parameter PS of the passive film.

[Description of Embodiments]

Hereinafter, a ferritic stainless steel sheet having exceptional steam oxidation resistance, which is one embodiment of the present invention, and a method for producing a ferritic stainless steel sheet will be described.
The ferritic stainless steel sheet of the present embodiment a ferritic stainless steel sheet containing, as the chemical composition, by mass%, C: more than 0% and 0.008% or less, Si: 0.01% to 2.50%, Mn: 0.01% to 0.50%, P: 0.0001% to 0.040%, S: 0.001% to 0.010%, Al: 0.001% to 2.500%, Cr: 10.0% to 25.0%, Nb: more than 0% and 0.80% or less, Ti: 0.05% to 0.50%, V: 0.01 % to 0.15%, N: more than 0% and 0.050% or less, Ni: 0% to 0.40%, Sn: 0% to 0.200%, Mo: 0% to 1.40%, Cu: 0% to 1.40%, B: 0% to 0.0020%, Sb: 0% to 0.5%, Zr: 0% to 0.5%, Co: 0% to 0.5%, W: 0% to 0.5%, Ta: 0% to 0.100%, Mg: 0% to 0.0050%, Ca: 0% to 0.0050%, Ga: 0% to 0.05% and REM: 0% to 0.1% with a remainder containing Fe and an impurity, in which, regarding a passive film present on the steel surface, a composition parameter PS represented by a formula (1) is 0.03 or more and 0.15 or less, and the surface coverage of an Al-containing oxide having a circle-equivalent diameter of 0.01 to 1.0 $\mu$m in the passive film is 15% to 40%.

$$PS = Al/(Ti + Mn + Si + Cr) \qquad \cdots \qquad \text{Formula (1)}$$

Here, the element symbol in the formula (1) is the content (mass%) of each element at a depth position at which the Al amount is maximized in the depth direction of the passive film.
Hereinafter, the chemical composition of the ferritic stainless steel sheet of the present embodiment (hereinafter, simply referred to as the steel sheet in some cases) will be described.

<Chemical composition>

C: more than 0% and 0.008%
Since C degrades the formability and corrosion resistance of the steel sheet, there is a need to suppress the content thereof at a low level and the C content is 0.008% or less. The C content may be 0%. However, it is difficult to set the C content to 0% in practical steel sheets in consideration of production, and the C content may thus be more than 0%. However, since excess reduction in the C content increases the refining cost, when the oxidation resistance is considered, the C content may be 0.001% or more or 0.002% or more. The C content may be 0.007% or less or 0.006% or less.

Si: 0.01% to 2.50%

Si is useful as a deoxidizing agent and is an effective element for corrosion resistance, high-temperature strength and oxidation resistance. On the other hand, Si degrades the workability and the pickling property. Therefore, the Si content is 2.50% or less. On the other hand, since excess reduction in the Si content increases the refining cost, the lower limit of the Si content is 0.01% or more. The Si content may be 0.03% or more or 0.10% or more. The Si content may be 1.50% or less, 1.00% or less, 0.50% or less or 0.15% or less.

Mn: 0.01 % to 0.50%

Mn is an element that is contained as a deoxidizing agent but degrades the corrosion resistance or the oxidation resistance when excessively contained. Particularly, in a case where Mn is used in a urea SCR system, it is likely that Mn oxide may be generated on the outer layer side of a scale and a red scale may be generated. Therefore, the Mn content is 0.50% or less. The Mn content may be 0.30% or less or 0.20% or less. Furthermore, the Mn content is desirably 0.10% or less in consideration of the scale peeling property. On the other hand, in a case where the Mn content is less than 0.01%, there is a concern that projections and recesses in the interface between a hot rolling scale, which is generated during hot rolling, and a steel sheet base material may become large and the surface of the ferritic stainless steel sheet may become rough. Therefore, the lower limit of the Mn content is 0.01% or more. The Mn content may be 0.03% or more and 0.05% or more.

P: 0.0001% to 0.040%

P is an element that degrades the toughness of the steel sheet. In addition, P is an element that also degrades the toughness of a welded zone in a case where the steel sheet has been welded. Therefore, the upper limit of the P content is 0.040% or less. The lower limit of the P content can be 0%, but the detection limit of the chemical analysis is 0.0001%, and the substantial lower limit value of the P content in practical steel sheets is thus 0.0001%. On the other hand, since an excess decrease in the P content of the stainless steel sheet causes an increase in the production cost, the lower limit of the P content is preferably 0.010% or more. The P content may be 0.030% or less or 0.020% or less.

S: 0.001 % to 0.010%

Since S is a harmful element that adversely affects the corrosion resistance and high-temperature cracking in a welded zone, the lower limit of the S content is 0.010% or less. Since corrosion resistance improvement by a decrease in the S content is saturated at 0.001%, the lower limit of the S content is 0.001% or more.

Al: 0.001% to 2.500%

A1 is contained as a deoxidizing element. In addition, A1 is an element that improves the oxidation resistance.
In a case where the A1 content is less than 0.001%, it becomes difficult to leave an Al-concentrated region containing an Al-containing oxide generated in a thermal treatment step in a passive film, and it becomes impossible to sufficiently obtain the steam oxidation resistance in a water vapor atmosphere. Therefore, the lower limit of the A1 content is 0.001% or more. On the other hand, when A1 is excessively contained, the workability of the steel sheet is degraded, and the upper limit of the A1 content is thus 2.500% or less. The A1 content may be 0.005% or more or 0.010% or more. The A1 content may be 1.500% or less, 1.000% or less, 0.500% or less, 0.200% or less or 0.150% or less.

Cr: 10.0% to 25.0%

In the steel sheet of the present embodiment, Cr is an essential element for oxidation resistance. Cr is an effective element to ensure favorable steam oxidation resistance particularly in a high-temperature water vapor environment where urea water is attached. In a case where the Cr content is less than 10.0%, a dense protective oxide scale is not formed when the steel sheet is used as a member of a urea SCR system. Therefore, the lower limit of the Cr content is 10.0% or more. On the other hand, when Cr is excessively contained, the workability of the steel sheet is degraded, and the upper limit of the Cr content is thus 25.0% or less. In addition, when the weldability is considered, the Cr content is desirably 14.0% to 18.0%. The Cr content may be 15.0% to 17.5%.

Nb: more than 0% and 0.80% or less

Nb is an element that improves the intergranular corrosion resistance or the high-temperature strength. When the Nb content becomes more than 0.80%, the workability of the steel sheet significantly deteriorates, and the upper limit of the Nb content is thus 0.80% or less. Furthermore, when the productivity, the oxidation resistance and the alloying cost are considered, the Nb content may be 0.003% or more or 0.005% or more and may be 0.30% or less.

Ti: 0.05% to 0.50%

Ti is an element that bonds to C, N or S to improve the corrosion resistance, intergranular corrosion resistance, normal-temperature ductility and deep drawability of the steel sheet. In a case where the Ti content is less than 0.05%, improvement of the above-described characteristics is not expected, and the lower limit of the Ti content is thus 0.05% or more. On the other hand, when more than 0.50% of Ti is contained, the workability of the steel sheet significantly deteriorates, and the upper limit of the Ti content is thus 0.50% or less. Furthermore, when the oxidation resistance or the productivity is considered, the Ti content is desirably 0.07% to 0.30%. The Ti content may be 0.10% or more or 0.15% or more and may be 0.25% or less.

V: 0.01% to 0.15%

V is an element that improves corrosion resistance. When the V content becomes more than 0.15%, the corrosion resistance and workability of the steel sheet deteriorate, and the upper limit of the V content is thus 0.15% or less. Furthermore, when the productivity, the oxidation resistance and the alloying cost are considered, the V content is preferably 0.01% or more. The V content may be 0.03% or more or 0.05% or more and may be 0.14% or less or 0.11% or less.

N: More than 0% and 0.050% or less

Since N, similar to C, degrades the formability and corrosion resistance of the steel sheet, the N content is 0.050% or less. On the other hand, excess reduction in the N content increases the refining cost. When steam oxidation resistancesteam oxidation resistance is considered, the N content is desirably 0.002% to 0.045%. The N content may be 0.005% or more, may be 0.040% or less and may be 0.030% or less.

The ferritic stainless steel sheet of the present embodiment may further contain, in the chemical composition, one or more of Ni: 0.01% to 0.40%, Sn: 0.001% to 0.20%, Mo: 0.05% to 1.40% and Cu: 0.05% to 1.40%.

Ni: 0.01% to 0.40%

Ni is an element that further improves the rust resistance and can be contained as necessary. In a case where the Ni content is less than 0.01%, the rust resistance improvement effect is not expected, and the lower limit of the Ni content is thus preferably 0.01% or more in the case of containing Ni. On the other hand, when the Ni content becomes more than 0.40%, there are cases where not only does the oxidation resistance of the steel sheet deteriorate but also the workability deteriorates, and the upper limit of the Ni content is thus 0.40% or less. Furthermore, when the productivity, the oxidation resistance and the alloying cost are considered, the Ni content is desirably 0.10% or more and preferably 0.30% or less.

Sn: 0.001% to 0.200%

Sn is an element that further improves the corrosion resistance or the high-temperature strength and can thus be contained as necessary. In a case where the Sn content is less than 0.001%, additional improvement in corrosion resistance and high-temperature strength is not expected, and the lower limit of the Sn content is thus preferably 0.001% or more in the case of containing Sn. On the other hand, when the Sn content becomes more than 0.200%, the productivity significantly deteriorates, and the upper limit of the Sn content is thus 0.200% or less. Furthermore, when the workability, the oxidation resistance and the alloying cost are considered, the Sn content is desirably 0.010% or more and desirably 0.15% or less.

Mo: 0.05% to 1.40%

Mo is an element that improves the corrosion resistance of the steel sheet and can thus be contained as necessary. In a case where the Mo content is less than 0.05%, additional improvement in corrosion resistance is not expected, and the lower limit of the Mo content is thus preferably 0.05% or more in the case of containing Mo. On the other hand, when Mo is excessively contained, not only do the workability and oxidation resistance of the steel sheet deteriorate but the alloying cost also increases, and the upper limit of the Mo content is thus 1.40% or less. Furthermore, when productivity, scale adhesion and alloying cost are considered, the Mo content is desirably 0.30% or more and desirably 1.20% or less. The Mo content may also be 0.50% or more.

Cu: 0.05% to 1.40%

Cu is an element that improves the rust resistance or high-temperature strength of the steel sheet and can thus be contained as necessary. In a case where the Cu content is less than 0.05%, additional improvement in corrosion resistance is not expected, and the lower limit of the Cu content is thus preferably 0.05% or more in the case of containing Cu. On the other hand, when the Cu content becomes more than 1.40%, the ductility of the steel sheet significantly deteriorates, and the upper limit of the Cu content is thus 1.40% or less. Furthermore, when the productivity or the oxidation resistance is considered, the Cu content is desirably 0.30% or more and desirably 1.20% or less.

The ferritic stainless steel sheet of the present embodiment may further contain, in the chemical composition, elements to be described below as necessary.

One or more of B: 0.0003% to 0.0020%, Sb: 0.005% to 0.5%, Zr: 0.005% to 0.5%, Co: 0.005% to 0.5%, W: 0.005% to 0.5%, Ta: 0.005% to 0.100%, Mg: 0.0001% to 0.0050%, Ca: 0.0001% to 0.0050%, Ga: 0.001% to 0.05% and REM: 0.001% to 0.1%.

B is an element that improves the secondary workability at the time of forming a component and can be contained as necessary. When the B content becomes more than 0.0020%, the productivity or the intergranular corrosion resistance significantly deteriorates, and the upper limit of the B content is thus 0.0020% or less. Furthermore, when the workability, the oxidation resistance and the alloying cost are considered, the B content is desirably 0.0003% or more and desirably 0.0010% or less in the case of containing B.

Sb, Zr, Co and W are all elements that improve the corrosion resistance, and one or more thereof can be contained as necessary. In a case where one or more of these elements are contained, an effect is developed when 0.005% or more of each is contained. These elements are important elements to suppress the corrosion rate; however, when these elements are excessively contained, the productivity are degraded and the cost are decreased, and the upper limit of the content of each of all is thus 0.5% or less. A more desirable range of each of these elements is 0.05% or more and 0.4% or less.

Ta is an element that improves the corrosion resistance by the modification of an inclusion. In a case where Ta is contained, the above-described effect is developed when the Ta content is 0.005% or more. On the other hand, when the Ta content is more than 0.100%, there are cases where the ductility at normal temperature deteriorates or the toughness deteriorates. Therefore, the Ta content is preferably 0.100% or less. The Ta content is more preferably 0.050% or less.

Mg is an element that does not only act as a deoxidizing agent by forming Mg oxide with A1 in molten steel but also acts as a crystallization nucleus of TiN. TiN serves as a solidification nucleus of ferrite in a solidification process. Therefore, Mg contained accelerates the crystallization of TiN, whereby fine ferrite can be generated during solidification. When a solidified structure is refined, a surface defect attributed to a coarse solidified structure such as ridging or roping, which is likely to be generated at the time of working the steel sheet into a product shape, can be prevented. Additionally, when the solidified structure is refined, workability improves. Therefore, Mg may be contained as necessary.

In a case where Mg is contained, 0.0001% or more of Mg needs to be contained to develop these effects. When the Mg content exceeds 0.0050%, the productivity deteriorates, and the upper limit of the Mg content is thus 0.0050% or less. Preferably, the Mg content is more preferably 0.0003% or more and preferably 0.0020% or less in consideration of the productivity.

Ca is an element that improves the oxidation resistance in a case where the content thereof is a trace amount and may be contained to an extent of 0.0050% or less. Preferably, 0.0001 % or more of Ca can be contained.

Ga is an element that contributes to workability improvement and may be contained to an extent of 0.05% or less. Preferably, 0.001% or more of Ga can be contained.

REM is an effective element for improvement in the corrosion resistance of the steel sheet by improving the hot workability or the cleanliness of steel and may be contained as necessary. In a case where REM is contained, 0.001% or more of REM is preferably contained to develop this effect. However, when REM is excessively contained, the alloying cost increases, and the productivity deteriorates, and the upper limit is thus 0.1% or less. The REM content is preferably 0.001% or more and to 0.05% or less in consideration of the effect, the economic efficiency and the productivity.

REM (rare earth element) mentioned herein refers to the collective term of two elements of scandium (Sc) and yttrium (Y) and 15 elements (lanthanides) of lanthanum (La) to lutetium (Lu). "REM" mentioned in the present embodiment is an element composed of one or more of these elements. The REM content means the total content of these elements. As REM, for example, La, Ce, Nd and the like can be exemplified.

In the ferritic stainless steel sheet of the present embodiment, the remainder other than the above-described elements is Fe and an impurity. However, different elements other than each of the above-described elements can be contained to an extent that the effect of the present embodiment is not impaired. The impurity mentioned herein means a component that is incorporated from a raw material such as a mineral or a scrap or due to a variety of causes in production steps at the time of industrially producing the ferritic stainless steel sheet of the present embodiment and is permitted to an extent that no adverse influences are given to the present invention.

In the steel sheet of the present embodiment, regarding the passive film present on the steel sheet surface, the composition parameter PS represented by the formula (1) is 0.03 or more and 0.15 or less, and the surface coverage of the Al-containing oxide having a circle-equivalent diameter of 0.01 to 1.0 $\mu$m in the passive film is 15% to 40%. In this case, improvement in the steam oxidation resistance is recognized. The Al-containing oxide is contained in the passive film on the steel sheet surface.

<Composition parameter PS (= Al/(Ti + Mn + Si + Cr)) of passive film: 0.03 or more and 0.15 or less>

In the present embodiment, it was found that the amount of the Al-containing oxide that is contained in the passive film is within a certain range, whereby the steam oxidation resistance is improved. As a parameter for evaluating the amount of the Al-containing oxide that is contained in the passive film, in the present embodiment, the composition parameter PS is used. The composition parameter PS is an index conceived from the following idea. First, attention is paid to the A1 concentration in the passive film, and a depth position in the thickness direction of the passive film at which the A1 concentration is maximized is specified. In addition, it was found that, in the relationship among the concentration of each of the constituent elements (Al, Ti, Mn, Si and Cr) of the passive film at the specified depth position, there is an optimal range from the viewpoint of ensuring the Al-containing oxide that is contained in the film. Specifically, the composition parameter PS can be obtained by introducing Al, Ti, Mn, Si and Cr at the specified depth position into the formula (1).

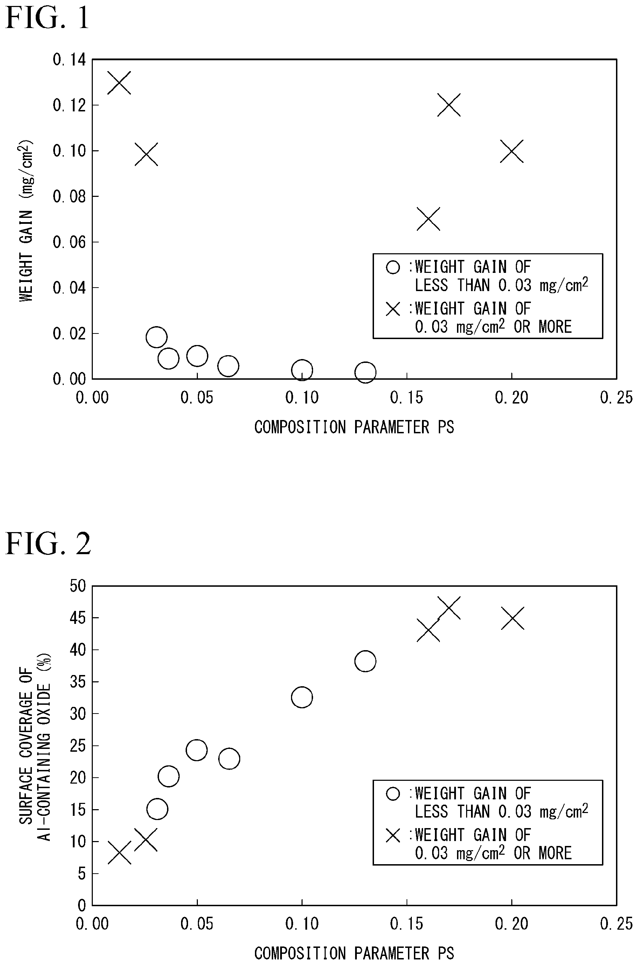

FIG. 1 shows the relationship between the weight gain of the steel sheet and the composition parameter PS. The steel sheet shown in FIG. 1 is a steel sheet that has undergone finish annealing performed under conditions of an atmosphere: 1% to 50% of $H_2$ + a remainder of $N_2$, an atmosphere dew point: -40°C to -20°C, a soaking temperature of 814°C to 1000°C and a soaking time of 0 to 700 seconds in a finish annealing step and then electrolytic pickling in an acid solution containing 0.5 to 10.9 g/L of fluorine ions.

As shown in FIG. 1, in a case where the composition parameter PS of the passive film is less than 0.03, the weight gain of the steel sheet becomes 0.03 mg/cm$^2$ or more, and it is impossible to exhibit exceptional oxidation resistance in an environment where the steel sheet is exposed to exhaust gas and urea water. This is considered to be because the Al concentration in the oxide configuring the passive film becomes low, consequently, the oxide becomes coarse and easily transmits water vapor or oxygen and oxidation cannot be suppressed. On the other hand, in a case where the composition parameter PS is more than 0.15, the surface coverage of the Al-containing oxide becomes more than 40%, and exceptional oxidation resistance is thus not exhibited. That is, in a case where the composition parameter PS of the passive film is 0.03 or more and 0.15 or less, the oxide becomes dense so as not to easily transmit water vapor or oxygen, and exceptional oxidation resistance can be exhibited. Based on what has been described above, the composition parameter PS of the passive film is 0.03 or more and 0.15 or less.

<Surface coverage of Al-containing oxide having circle-equivalent diameter of 0.01 to 1.0 $\mu$m: 15% to 40%>

(Circle-equivalent diameter of Al-containing oxide: 0.01 to 1.0 $\mu$m)

At the time of obtaining the surface coverage of the Al-containing oxide, the Al-containing oxide that is a measurement object is an Al-containing oxide having a circle-equivalent diameter of 0.01 to 1.0 $\mu$m. In a case where the surface coverage of the Al-containing oxide having a circle-equivalent diameter of 0.01 to 1.0 $\mu$m is 15% to 40%, the steel sheet of the present embodiment is capable of exhibiting exceptional steam oxidation resistance in an environment where the steel sheet is exposed to exhaust gas and urea water. On the steel sheet surface that is not covered with the Al-containing oxide, oxidation is accelerated and an oxide scale is generated. This oxide scale grows two-dimensionally to become a thick oxide scale and easily peels off and exceptional oxidation resistance is not exhibited. On the other hand, it is considered that the Al-containing oxide having a circle-equivalent diameter of 0.01 to 1.0 $\mu$m is capable of suppressing the two-dimensional growth of an oxide scale like pinning and exceptional oxidation resistance is exhibited. In a case where the circle-equivalent diameter of the Al-containing oxide is less than 0.01 $\mu$m, since the

pinning effect is weak, no contribution is made to improvement in oxidation resistance. In addition, in the case of an Al-containing oxide having a circle-equivalent diameter of more than 1.0 $\mu$m, the Al-containing oxide also grows in the thickness direction and easily peels off at the time of winding or working a steel foil product and exceptional oxidation resistance is not exhibited. Based on what has been described above, an Al-containing oxide having a circle-equivalent diameter within a range of 0.01 to 1.0 $\mu$m becomes the measurement object of the surface coverage.

(Surface coverage of Al-containing oxide: 15% to 40%)

FIG. 2 shows the relationship of the surface coverage of the Al-containing oxide and the weight gain of the steel sheet with respect to the composition parameter PS. Even in a state where the composition parameter PS of the passive film satisfies 0.03 or more and 0.15 or less, in a case where the steel sheet surface coverage of the Al-containing oxide having a circle-equivalent diameter of 0.01 to 1.0 $\mu$m is less than 15%, exceptional oxidation resistance cannot be exhibited. As described above, on the steel sheet surface that is not covered with the Al-containing oxide, oxidation is accelerated and oxide scales are generated. In a case where the steel sheet surface coverage of the Al-containing oxide is less than 15%, these oxide scales grow two-dimensionally on the steel sheet surface, furthermore, join together to further grow and become a thick oxide scale and easily peels off, and exceptional oxidation resistance is not exhibited. On the other hand, in a case where the surface coverage of the Al-containing oxide is 15% or more, it is considered that the above-described two-dimensional growth of the oxide scales is suppressed like pinning and exceptional oxidation resistance is exhibited. In addition, in a case where the steel sheet surface coverage of the Al-containing oxide is more than 40%, the Al-containing oxide grows in the thickness direction and easily peels off at the time of winding or working a steel foil product and exceptional oxidation resistance is not exhibited. Based on what has been described above, the steel sheet surface coverage of the Al-containing oxide having a circle-equivalent diameter of 0.01 to 1.0 $\mu$m is set within a range of 15% to 40%. From the viewpoint of further exhibiting the pinning effect, the steel sheet surface coverage of the Al-containing oxide having a circle-equivalent diameter of 0.01 to 1.0 $\mu$m is preferably 20% or more. In addition, from the viewpoint of suppressing the excessive growth of the Al-containing oxide in the thickness direction, the surface coverage of the Al-containing oxide having a circle-equivalent diameter of 0.01 to 1.0 $\mu$m is preferably 35% or less.

The steam oxidation resistance of the steel sheet of the present embodiment is determined by, in addition to the weight gain accompanied by oxidation, whether or not a scale called as a red scale is generated. The red scale is a thick oxide scale generated due to an increase in the weight gain in a case where the steel sheet has been continuously oxidized in a water vapor atmosphere and in a temperature range of approximately 500°C. Peeling of the red scale is not preferable since there are cases where the NOx reduction performance in urea SCR systems is degraded.

The graphs shown in FIG. 1 and FIG. 2 are obtained by, in the following experiment, measuring the composition parameter PS of the passive film of the steel sheet and the circle-equivalent diameter and surface coverage of the Al-containing oxide and measuring the steam oxidation resistance of each steel sheet.

(Experiment)

Specimens were produced by subjecting the ferritic stainless steel sheet to each step of casting, hot rolling, pickling, cold rolling, annealing and pickling. The present inventors studied not only the steel components but also the final annealing and pickling conditions at the time of annealing and pickling a cold-rolled steel sheet, the composition of the passive film and the relationship between the weight gain and whether or not a red scale is generated in an oxidation test in detail.

A water vapor oxidation test was performed by humidifying argon containing 10% of $O_2$ to form a 7.5% water vapor atmosphere and continuously leaving a steel sheet alone in the water vapor atmosphere at 500°C for 50 hours. As a test piece of the water vapor oxidation test, a steel sheet that was 25 mm in length and 20 mm in width and had a front surface and a rear surface as final-pickled and end faces polished with #600 was used.

As the test piece for the water vapor oxidation test, a specimen obtained by preparing a cold-rolled steel sheet having a composition of 17.2% of Cr, 1.1% of Mo, 0.21% of Ti, 0.08% or Si, 0.12% of Mn, 0.08% of Al, 0.004% of C and 0.011% or N, performing a thermal treatment (finish annealing) on this cold-rolled steel sheet in an atmosphere of 1% to 50% of $H_2$ + a remainder of $N_2$, at a dew point of -40°C to -20°C and an annealing temperature (soaking temperature) of 814°C to 1000°C for a soaking time of 0 to 700 seconds and then performing electrolytic pickling in an acid solution containing 0.5 to 10.9 g/L of fluorine ions was used. In addition, the composition in a passive film was analyzed before the water vapor oxidation test was performed on the test piece for the water vapor oxidation test.

The composition parameter PS in the passive film is measured as described below. A circular measurement region having a diameter of 4 mm is set on the surface of the passive film. While sputtering is continuously performed on the passive film up to a depth of 100 nm from the film surface in this measurement region, the content rates of elements in the measurement region are measured by glow discharge optical emission spectrometry. The measurement by glow discharge optical emission spectrometry is performed every 5 nm in depth. Element distributions from the film surface to the depth of 100 nm are measured based on the measurement data. Elements capable of generating a cation are regarded as measurement object elements. Among detected elements, attention is paid to the distribution of A1 in the depth direction, and a depth position at which the A1 amount is maximized is specified. In addition, the contents (mass%) of Al, Ti, Mn, Si and Cr at the specified depth position are obtained. The content of each element is a percentage of the total amount of the measurement object elements (Al, Ti, Mn, Si and Cr) detected by glow discharge optical emission spectrometry. The composition parameter PS is obtained by introducing the contents (mass%) of Al, Ti, Mn, Si and Cr into the formula (1). For the glow discharge optical emission spectrometry, a glow discharge optical emission spectrometer (manufactured by Rigaku Corporation, GDA750) is used.

The surface coverage of the Al-containing oxide having a circle-equivalent diameter of 0.01 to 1.0 $\mu$m is obtained by jointly using the element mapping analysis of the passive film surface using an electron probe microanalyzer (EPMA (manufactured by JEOL Ltd., JXA-8530F)) and the observation of a secondary electron image using FE-SEM. First, on the passive film surface, element mapping analysis is performed in a 2 mm $\times$ 2 mm square measurement region at 4 $\mu$m square pitches to measure the distribution of A1. In the obtained A1 distribution, regions with an intensity of 10% or higher of the maximum intensity are designated as regions of the Al-containing oxide. That is, in a case where the maximum intensity of A1 in the measurement region is regarded as 100, regions where the A1 intensity becomes 10 or higher are designated as Al-containing oxide present regions. The proportion of the area of the Al-containing oxide present regions with respect to the area of the 2 mm $\times$ 2 mm square measurement region is regarded as the surface coverage of the Al-containing oxide.

In addition, the regions where the Al-containing oxide is recognized by the element mapping analysis are observed from a secondary electron image of EPMA, and the forms of the Al-containing oxides are specified. Specifically, five visual fields are observed from a secondary electron image at a magnification of 10000 times, the Al-containing oxides are specified in this secondary electron image, the areas thereof are measured by image processing, and circle-equivalent diameters are obtained with an assumption that the Al-containing oxides are circular. Al-containing oxides having a circle-equivalent diameter within a range of 0.01 to 1.0 $\mu$m are specified.

<Production method>

Next, a method for producing a steel sheet of the present embodiment will be described.

The method for producing a steel sheet of the present embodiment include each step of steelmaking, hot rolling, pickling, cold rolling and annealing and pickling. In the steelmaking, a method in which steel having a composition containing the above-described essential components and selective components, which are contained as necessary, is melted in a converter and, subsequently, secondary refining is performed is preferable. The molten steel is made into a slab according to a well-known casting method (continuous casting). The slab is heated to a predetermined temperature and hot-rolled by continuous rolling to a predetermined sheet thickness.

The hot-rolled steel sheet is pickled as necessary. In addition, hot-rolled sheet annealing may or may not be performed on the steel sheet after hot rolling in consideration of the productivity or the material quality.

Regarding cold rolling conditions, cold rolling of ordinary stainless steel sheets is any of reverse rolling with a Sendzimer rolling mill having a roll diameter of approximately 50 to 100 mm or unidirectional rolling with a tandem rolling mill having a roll diameter of 400 mm or more. In the production method of the present embodiment, any cold rolling method may be adopted. The tandem rolling is also exceptional in terms of productivity compared with the Sendzimer rolling. In order to increase the r value (Lankford value), which is an index of workability, it is preferable to perform cold rolling with a tandem rolling mill having a roll diameter of 400 mm or more.

In the production method of the present embodiment, a predetermined passive film is obtained by final annealing and pickling treatment in which a cold-rolled steel sheet after being cold-rolled is annealed and pickled. As ordinary thermal treatment conditions for stainless steel sheets after cold rolling (annealing conditions), a variety of methods are conceivable, but the present inventors found that an Al oxide concentrated by a thermal treatment can be left on the pickled steel sheet surface by performing a final annealing and pickling treatment on a cold-rolled steel sheet under specific conditions to be described below.

In the middle of studying the conditions of the final annealing and pickling treatment, when a thermal treatment is performed on a cold-rolled ferritic stainless steel sheet containing A1 under the finish annealing conditions of an annealing atmosphere of 3% to 20% of $H_2$ + a remainder of $N_2$, a dew point of the atmosphere set to -50°C to -20°C, a soaking temperature set to 700°C to 950°C and a soaking time set to five seconds or longer and 10 minutes or shorter and then electrolytic pickling is performed in an acid solution containing 1.0 to 10.0 g/L of fluorine ions, an A1 oxide can also be left on the steel sheet surface, and, consequently, the composition parameter PS becomes 0.03 or more in a region within 100 nm from the steel sheet surface. In addition, it was found that a steel sheet obtained by the final annealing and pickling treatment or components for a urea SCR system, such as a tank, a pipe, a plate, a rod and a spring, produced by working this steel sheet satisfy steam oxidation resistance.

The finish annealing step is performed in an atmosphere where 3% to 20% of a hydrogen gas is contained and the remainder is a nitrogen gas (3% to 20% of $H_2$ + remainder of $N_2$). When the hydrogen gas in the atmosphere is less than 3%, nitriding of the steel sheet surface is accelerated, and there is a concern of the generation of an A1 oxide being suppressed. Therefore, the hydrogen gas concentration in the annealing atmosphere is set to 3% or higher. The hydrogen gas is preferably set to 5% or higher. On the other hand, when the hydrogen gas in the atmosphere exceeds 20%, oxidation is accelerated due to hydrogen entry during the formation of an Al-based oxide film or an oxide film containing A1 as a main component, which may, possibly, adversely affect the formation of an oxide film. Additionally, when the hydrogen gas in the atmosphere exceeds 20%, there is a concern of an increase in the cost. Therefore, the hydrogen gas concentration in the annealing atmosphere is set to 20% or lower. The hydrogen gas is preferably set to 15% or lower.

The dew point of the atmosphere in the finish annealing step is set within a range of -50°C to -20°C. In a case where the dew point of the annealing atmosphere is higher than -20°C, the oxidation of A1 becomes insufficient, and the composition of a passive film does not satisfy the formula (1), and the upper limit of the dew point is thus set to -20°C or lower. In addition, in a case where the dew point of the annealing atmosphere is lower than -50°C, the Al-oxide formation effect is saturated, and the cost also increases, and the lower limit of the dew point is thus set to -50°C or higher.

In addition, the soaking temperature in the finish annealing step is set within a range of 700°C to 950°C. In a case where the soaking temperature during finish annealing is lower than 700°C, the composition of the passive film does not satisfy the formula (1), recrystallization is not accelerated, and necessary ductility as a material cannot be obtained, and the lower limit of the soaking temperature is thus set to 700°C or higher. On the other hand, in a case where the soaking temperature is higher than 950°C, excessive softening becomes a problem, and the upper limit is thus set to 950°C or lower.

Furthermore, the soaking time in the finish annealing step is set to five seconds or longer and 10 minutes or shorter. In a case where the soaking time is longer than 10 minutes, the excessive softening of the material becomes a problem, the soaking time is set to 10 minutes or shorter. The lower limit of the soaking time is not particularly limited; however, in a case where the soaking time is shorter than five seconds, the material is not stably recrystallized, additionally, the oxidation reaction of A1 becomes insufficient, and the surface coverage of the Al-containing oxide after electrolytic pickling becomes less than 15%, and the soaking time is thus set to five seconds or longer.

The electrolytic pickling after the finish annealing is performed in a solution containing HCl, $NaSO_4$, $H_2SO_4$, $NaNO_3$, $Na_2SiF_6$ or the like. Preferably, the electrolytic pickling is performed in a solution containing 1.0 to 10.0 g/L of fluorine ions. When the fluorine ion concentration in the solution in the electrolytic pickling is set to lower than 1.0 g/L, there is a concern that the Al-containing oxide, which will cover the surface, may be excessively present. Therefore, the fluorine ion concentration in the solution is preferably set to 1.0 g/L or higher. The fluorine ion concentration is more preferably set to 2.0 g/L or higher. On the other hand, when the fluorine ion concentration in the solution exceeds 10.0 g/L, there is a concern that the Al-containing oxide, which will cover the surface, may be excessively removed and may not be present. Therefore, the fluorine ion concentration in the solution is preferably set to 10.0 g/L or lower. The fluorine ion concentration is more preferably set to 8.0 g/L or lower.

When a salt treatment is performed after the above-described finish annealing, the steel sheet surface coverage of the Al-containing oxide becomes less than 15%. Therefore, after the finish annealing, no salt treatments are performed. A combined treatment of a salt treatment and electrolytic pickling is also not preferable from the viewpoint of ensuring the steel sheet surface coverage of the Al-containing oxide.

Production methods of other steps are not particularly regulated, and hot rolling conditions, the hot-rolled sheet thickness or the like may be selected as appropriate. In addition, temper rolling or a tension leveler may be provided after the cold rolling and the annealing. Furthermore, the product sheet thickness may also be selected depending on a required member thickness.

[Examples]

As described in Examples 1 and 2 below, molten steel having chemical components shown in Table 1, which were adjusted to be predetermined components, was melted, and this molten steel was cast to obtain a cast piece. The obtained cast piece was hot-rolled and, furthermore, pickled, and a 1.0 mm-thick cold-rolled sheet was produced under the conditions of cold rolling, finish annealing and pickling shown in Table 3. In the cold rolling, the cast piece was rolled with a Sendzimer rolling mill having a work roll diameter of 100 mm or a tandem rolling mill having a work roll diameter of 450 mm. Underlines in Tables 1 to 3 indicate that the corresponding values are outside the scope of the present invention. In addition, a reference sign '-' in Table 1 means that the corresponding element contents are 0% in the significant digits regulated in the embodiment (numerical values up to the minimum digit).

After the cold rolling, finish annealing was performed in a furnace for which the atmosphere, the dew point, the soaking temperature and the soaking time had been controlled. After the finish annealing, electrolytic pickling was performed using a pickling solution containing $NaSO_4$, $H_2SO_4$, $NaNO_3$ and $Na_2SiF_6$ and having a fluorine ion concentration shown in Table 3.

The electrolytic pickling was performed by alternating electrolysis, in which anodic electrolysis and cathodic electrolysis were alternately repeated, at a current density of 60 A/dm$^2$ for a total electrolysis time of 10 seconds. In addition, Comparative Example c6 is a case where electrolytic pickling was performed after a salt treatment was performed. The salt treatment was performed by immersing the cold-rolled sheet in a molten salt obtained by mixing $NaNO_3$ and NaOH and heating the mixture to 470°C for 10 seconds. The obtained steel sheet was subjected to a water vapor oxidation test.

The composition parameter PS in a passive film was measured as described below. A circular measurement region having a diameter of 4 mm was set on the surface of the passive film. While sputtering was continuously performed on the passive film up to a depth of 100 nm from the film surface in this measurement region, the content rates of elements in the measurement region were measured by glow discharge optical emission spectrometry. The measurement by glow discharge optical emission spectrometry was performed every 5 nm in depth. Element distributions from the film surface to the depth of 100 nm were measured based on the measurement data. Elements capable of generating a cation were regarded as measurement object elements. Among detected elements, attention was paid to the distribution of A1 in the depth direction, and a depth position at which the A1 amount was maximized was specified. In addition, the contents (mass%) of Al, Ti, Mn, Si and Cr at the specified depth position were obtained. The content of each element is a percentage of the total amount of the measurement object elements (Al, Ti, Mn, Si and Cr) detected by glow discharge optical emission spectrometry. The composition parameter PS was obtained by introducing the contents (mass%) of Al, Ti, Mn, Si and Cr into a formula (1). For the glow discharge optical emission spectrometry, a glow discharge optical emission spectrometer (manufactured by Rigaku Corporation, GDA750) was used.

The surface coverage of an Al-containing oxide having a circle-equivalent diameter of 0.01 to 1.0 $\mu$m was obtained by jointly using the element mapping analysis of the passive film surface using an electron probe microanalyzer (EPMA (manufactured by JEOL Ltd., JXA-8530F)) and the observation of a secondary electron image using FE-SEM (manufactured by JEOL Ltd., JSM-7001F). First, on the passive film surface, element mapping analysis was performed in a 2 mm $\times$ 2 mm square measurement region at 4 $\mu$m square pitches to measure the distribution of A1. In the obtained A1 distribution, regions with an intensity of 10% or higher of the maximum intensity were designated as regions of the Al-containing oxide. The proportion of the area of the Al-containing oxide present regions with respect to the area of the 2 mm $\times$ 2 mm square measurement region was regarded as the surface coverage of the Al-containing oxide (expressed as "Steel sheet surface coverage" in Table 3).

In addition, the regions where the Al-containing oxide was recognized by the element mapping analysis were observed from a secondary electron image of EPMA, and the forms of the Al-containing oxides were specified. Specifically, five visual fields were observed from a secondary electron image at a magnification of 10000 times, the Al-containing oxides were specified in this secondary electron image, the areas thereof were measured by image processing, and circle-equivalent diameters were obtained with an assumption that the Al-containing oxides were circular. Al-containing oxides having a circle-equivalent diameter within a range of 0.01 to 1.0 $\mu$m were specified.

The water vapor oxidation test was performed in a 7.5% water vapor atmosphere obtained by humidifying argon containing 10% of $O_2$. The steel sheet was left alone in this water vapor atmosphere at 500°C for 50 hours. As a test piece of the water vapor oxidation test, a steel sheet that was 25 mm in length and 20 mm in width and had a front surface and a rear surface as final-pickled and end faces polished with #600 was used.

The steam oxidation resistance was decided using the weight gain after the water vapor oxidation test as an index. In a case where the weight gain was 0.01 mg/cm$^2$ or less, the steam oxidation resistance was determined as superior and decided as very good (expressed as "AA" in Tables 2 and 3). In addition, in a case where the weight gain was more than 0.01 mg/cm$^2$ and 0.03 mg/cm$^2$ or less, the steam oxidation resistance was determined as exceptional and decided as good (expressed as "A" in Tables 2 and 3). On the other hand, in a case where the weight gain was 0.03 mg/cm$^2$ or more, since there was a concern that an oxide scale might easily peeled off and a device relating to a urea SCR system might be damaged, and the steam oxidation resistance was thus determined as bad (expressed as "B" in Tables 2 and 3). "Oxidation resistance" in Table 2 and Table 3 means the steam oxidation resistance.

<Example 1>

On Steel Nos. A1 to A28 and a1 to a11 shown in Table 1, cold rolling and the subsequent steps were performed under the conditions of a reference sign C7 shown in Table 3, thereby producing stainless steel sheets.

As shown in Table 2, in reference signs B1 to B28, since the steel components, the composition parameter PS of the passive film and the coverage rate of the Al-containing oxide satisfied the conditions of the present invention, the steam oxidation resistance in the water vapor oxidation test was favorable.

In the reference sign b1, since A1 was below the lower limit of the range, the composition parameter PS was low, and the coverage rate of the Al-containing oxide was less than 15%, the steam oxidation resistance was poor.

In the reference sign b2, since A1 was above the upper limit of the range, and the coverage rate of the Al-containing oxide exceeded 40%, the steam oxidation resistance was poor.

In the reference sign b3, since C was above the upper limit of the range, abnormal oxidation occurred to suppress the generation of an A1 oxide, and the composition parameter PS did not satisfy the scope of the present invention, the steam oxidation resistance was poor.

In the reference sign b4, since Si and M were above the upper limits of the ranges, and Si and Mn were concentrated in the oxide, which made the composition parameter PS not satisfy the scope of the present invention, the steam oxidation resistance was poor.

In the reference sign b5, since P and S were above the upper limits, and the composition parameter PS did not satisfy the scope of the present invention, the steam oxidation resistance was poor.

In the reference sign b6, since Cr was above the upper limit, the corrosion resistance excessively improved, which made it difficult to melt and remove Cr in the oxide by pickling, and the composition parameter PS did not satisfy the scope of the present invention, the steam oxidation resistance was poor.

In the reference sign b7, since Cr was below the lower limit, Fe concentrated in the oxide too much to be fully melted by pickling, and the composition parameter PS did not satisfy the scope of the present invention, the steam oxidation resistance was poor.

In the reference sign b8, Mo and Cu were above the upper limits, and the corrosion resistance excessively improved. As a result, it became difficult to melt and remove the oxide of Fe or Cr in the pickling, and the range of the composition parameter PS was not satisfied, and the steam oxidation resistance was thus poor.

In the reference sign b9, Mo and Cu were below the lower limits, and the scale adhesion deteriorated. Furthermore, the Al-containing oxide was excessively pickled due to the deterioration of the corrosion resistance, the removal of the Al-containing oxide was accelerated, and the coverage rate of the Al-containing oxide became less than 15%. As a result, the steam oxidation resistance was poor.

In the reference sign b10, Nb, Ti, V and N were above the upper limits, and the excessive Nb amount and the excessive V amount led to workability deterioration. Additionally, Ti concentrated in the oxide, which made the composition parameter PS not satisfy the scope of the present invention. Furthermore, the steel sheet was excessively pickled due to the deterioration of the corrosion resistance attributed to the excessive N amount, the removal of the Al-containing oxide was accelerated, and the coverage rate of the Al-containing oxide became less than 15%. As a result, the steam oxidation resistance was poor.

In the reference sign 11, V was lower than the lower limit, and the refining cost increased. Additionally, the steel sheet was excessively pickled due to the deterioration of the corrosion resistance attributed to the lack of the V amount, the removal of the Al-containing oxide was accelerated, and the coverage rate of the Al-containing oxide became less than 15%. As a result, the steam oxidation resistance was poor.

[Table 1]

| Steel No. | Chemical components (mass%, remainder: Fe and impurity) | | | | | | | | | | | | | | | Others | Type |
|---|---|---|---|---|---|---|---|---|---|---|---|---|---|---|---|---|---|
| | C | Si | Mn | P | S | Al | Cr | Mo | Cu | Nb | Ti | V | N | Ni | Sn | | |
| A1 | 0.007 | 0.44 | 0.15 | 0.025 | 0.008 | 0.997 | 17.8 | 0.67 | 0.56 | 0.138 | 0.18 | 0.09 | 0.042 | - | - | | Invention Example |
| A2 | 0.005 | 2.38 | 0.46 | 0.019 | 0.004 | 0.048 | 21.6 | 1.26 | 0.26 | 0.089 | 0.06 | 0.07 | 0.020 | - | - | | |
| A3 | 0.003 | 0.56 | 0.45 | 0.037 | 0.009 | 0.086 | 13.7 | 0.47 | 0.76 | 0.196 | 0.16 | 0.11 | 0.014 | - | - | | |
| A4 | 0.003 | 0.32 | 0.44 | 0.021 | 0.006 | 2.440 | 22.2 | 0.94 | 0.50 | 0.059 | 0.15 | 0.10 | 0.018 | - | - | | |
| A5 | 0.002 | 1.22 | 0.12 | 0.018 | 0.006 | 0.002 | 11.8 | 1.30 | 1.31 | 0.245 | 0.05 | 0.06 | 0.015 | - | - | | |
| A6 | 0.006 | 1.78 | 0.08 | 0.035 | 0.006 | 0.175 | 24.8 | 0.98 | 0.41 | 0.423 | 0.12 | 0.12 | 0.044 | - | - | | |
| A7 | 0.001 | 0.89 | 0.17 | 0.036 | 0.006 | 1.436 | 10.1 | 0.45 | 1.03 | 0.417 | 0.20 | 0.12 | 0.049 | - | - | | |
| A8 | 0.005 | 0.05 | 0.22 | 0.026 | 0.002 | 0.113 | 16.7 | 1.39 | 1.37 | 0.773 | 0.13 | 0.12 | 0.002 | - | - | | |
| A9 | 0.004 | 0.43 | 0.27 | 0.013 | 0.008 | 0.080 | 10.2 | 0.06 | 0.06 | 0.793 | 0.12 | 0.08 | 0.006 | - | - | | |
| A10 | 0.006 | 0.39 | 0.27 | 0.026 | 0.008 | 0.135 | 14.9 | 1.00 | 0.51 | 0.770 | 0.48 | 0.14 | 0.045 | - | - | | |
| A11 | 0.003 | 0.44 | 0.12 | 0.015 | 0.003 | 0.268 | 23.8 | 0.93 | 0.80 | 0.060 | 0.07 | 0.02 | 0.004 | - | - | | |
| A12 | 0.006 | 0.48 | 0.06 | 0.026 | 0.007 | 0.170 | 19.1 | 0.49 | 0.91 | 0.112 | 0.20 | 0.08 | 0.039 | 0.35 | - | | |
| A13 | 0.006 | 0.06 | 0.36 | 0.036 | 0.004 | 0.435 | 23.3 | 0.09 | 0.54 | 0.128 | 0.14 | 0.08 | 0.025 | - | 0.180 | | |
| A14 | 0.004 | 0.57 | 0.22 | 0.025 | 0.002 | 0.247 | 18.2 | 0.22 | 0.10 | 0.050 | 0.11 | 0.07 | 0.019 | 0.04 | 0.003 | | |
| A15 | 0.002 | 0.03 | 0.03 | 0.021 | 0.001 | 0.006 | 17.1 | 0.99 | 0.07 | 0.003 | 0.15 | 0.03 | 0.036 | 0.08 | 0.003 | | |
| A16 | 0.007 | 0.12 | 0.15 | 0.034 | 0.008 | 0.011 | 17.7 | 1.13 | 0.07 | 0.005 | 0.24 | 0.11 | 0.014 | 0.15 | 0.020 | | |
| A17 | 0.002 | 0.12 | 0.15 | 0.025 | 0.008 | 0.822 | 17.8 | 0.67 | 0.56 | 0.138 | 0.18 | 0.09 | 0.042 | - | - | B: 0.0005 | |
| A18 | 0.007 | 1.11 | 0.32 | 0.025 | 0.002 | 0.128 | 12.3 | 1.22 | 0.25 | 0.221 | 0.05 | 0.07 | 0.023 | - | - | Sb: 0.02 | |
| A19 | 0.004 | 0.78 | 0.10 | 0.030 | 0.004 | 0.032 | 14.1 | 0.97 | 0.10 | 0.761 | 0.08 | 0.06 | 0.019 | - | - | Zr: 0.04 | |
| A20 | 0.003 | 0.44 | 0.33 | 0.032 | 0.004 | 0.027 | 22.9 | 0.45 | 0.15 | 0.112 | 0.21 | 0.08 | 0.009 | - | - | Co: 0.1 | |
| A21 | 0.003 | 0.89 | 0.40 | 0.022 | 0.006 | 0.040 | 15.1 | 0.88 | 0.08 | 0.080 | 0.31 | 0.03 | 0.033 | - | - | W: 0.2 | |
| A22 | 0.005 | 0.24 | 0.12 | 0.028 | 0.005 | 0.650 | 19.7 | 1.02 | 0.72 | 0.307 | 0.06 | 0.05 | 0.021 | - | - | Ta: 0.01 | |
| A23 | 0.006 | 2.22 | 0.18 | 0.027 | 0.007 | 0.044 | 11.6 | 0.23 | 1.11 | 0.005 | 0.28 | 0.07 | 0.018 | - | - | Mg: 0.0005 | |
| A24 | 0.005 | 0.39 | 0.05 | 0.025 | 0.001 | 0.066 | 16.5 | 0.22 | 0.89 | 0.621 | 0.07 | 0.02 | 0.035 | - | - | Ca: 0.0011 | |

(continued)

| Steel No. | Chemical components (mass%, remainder: Fe and impurity) | | | | | | | | | | | | | | | Others | Type |
|---|---|---|---|---|---|---|---|---|---|---|---|---|---|---|---|---|---|
| | C | Si | Mn | P | S | Al | Cr | Mo | Cu | Nb | Ti | V | N | Ni | Sn | | |
| A25 | 0.002 | 0.50 | 0.08 | 0.021 | 0.001 | 1.220 | 10.9 | 1.28 | 0.55 | 0.010 | 0.32 | 0.12 | 0.019 | - | - | Ga: 0.01 | |
| A26 | 0.005 | 0.12 | 0.07 | 0.022 | 0.002 | 0.772 | 21.1 | 0.65 | 0.43 | 0.090 | 0.29 | 0.10 | 0.021 | - | - | REM: 0.01 | |
| A27 | 0.004 | 0.10 | 0.22 | 0.025 | 0.001 | 0.091 | 17.8 | - | - | 0.150 | 0.20 | 0.08 | 0.008 | - | - | | |
| A28 | 0.009 | 0.35 | 0.28 | 0.030 | 0.002 | 0.085 | 17.4 | 0.87 | 0.08 | 0.013 | 0.15 | 0.12 | 0.016 | - | - | B: 0.0010 Co: 0.2 | |
| a1 | 0.009 | 0.06 | 0.22 | 0.011 | 0.008 | 0.794 | 16.3 | 0.79 | 0.68 | 0.090 | 0.11 | 0.09 | 0.047 | - | - | | Comparative Example |
| a2 | 0.005 | 2.58. | 0.59 | 0.013 | 0.002 | 0.172 | 23.3 | 0.58 | 0.37 | 0.100 | 0.33 | 0.09 | 0.029 | - | - | | |
| a3 | 0.005 | 0.94 | 0.26 | 0.044 | 0.013 | 0.099 | 20.2 | 0.54 | 1.05 | 0.231 | 0.18 | 0.08 | 0.008 | - | - | | |
| a4 | 0.004 | 0.32 | 0.03 | 0.021 | 0.002 | 2.580 | 19.6 | 0.54 | 1.23 | 0.023 | 0.42 | 0.08 | 0.030 | - | - | | |
| a5 | 0.008 | 1.49 | 0.40 | 0.011 | 0.002 | 0.0003 | 20.9 | 0.46 | 0.55 | 0.160 | 0.05 | 0.12 | 0.046 | - | - | | |
| a6 | 0.008 | 1.05 | 0.37 | 0.035 | 0.002 | 0.384 | 26.3 | 0.38 | 1.30 | 0.513 | 0.13 | 0.11 | 0.048 | - | - | | |
| a7 | 0.002 | 0.66 | 0.33 | 0.026 | 0.008 | 0.044 | 9.1 | 1.15 | 0.11 | 0.411 | 0.42 | 0.05 | 0.017 | - | - | | |
| a8 | 0.005 | 0.18 | 0.32 | 0.020 | 0.009 | 0.489 | 16.5 | 1.52 | 1.73 | 0.094 | 0.21 | 0.11 | 0.039 | - | - | | |
| a9 | 0.005 | 0.71 | 0.09 | 0.018 | 0.008 | 0.066 | 24.1 | 0.01 | 0.02 | 0.147 | 0.14 | 0.07 | 0.046 | - | - | | |
| a10 | 0.002 | 0.79 | 0.21 | 0.036 | 0.009 | 0.482 | 17.0 | 0.41 | 0.57 | 0.960 | 0.72 | 0.22 | 0.075 | - | - | | |
| a11 | 0.005 | 0.92 | 0.08 | 0.023 | 0.008 | 0.375 | 16.6 | 0.59 | 0.48 | 0.020 | 0.03 | 0.004 | 0.001 | - | - | | |
| Underlines indicate that the corresponding values are outside the scope of the present invention. | | | | | | | | | | | | | | | | | |

EP 4 403 659 A1

[Table 2]

| Reference sign | Steel No. | Passive film | | Characteristic evaluation | Type |
|---|---|---|---|---|---|
| | | Composition parameter PS Al/ (Ti + Mn +Si + Cr) | Steel sheet surface coverage (%) | Oxidation resistance | |
| B1 | A1 | 0.03 | 15 | AA | Invention Example |
| B2 | A2 | 0.15 | 40 | AA | |
| B3 | A3 | 0.12 | 37 | AA | |
| B4 | A4 | 0.13 | 38 | AA | |
| B5 | A5 | 0.05 | 23 | AA | |
| B6 | A6 | 0.10 | 34 | AA | |
| B7 | A7 | 0.08 | 30 | AA | |
| B8 | A8 | 0.05 | 24 | AA | |
| B9 | A9 | 0.03 | 16 | AA | |
| B10 | A10 | 0.09 | 32 | AA | |
| B11 | A11 | 0.05 | 23 | AA | |
| B12 | A12 | 0.06 | 26 | AA | |
| B13 | A13 | 0.12 | 37 | AA | |
| B14 | A14 | 0.04 | 22 | AA | |
| B15 | A15 | 0.05 | 23 | AA | |
| B16 | A16 | 0.03 | 16 | AA | |
| B17 | A17 | 0.07 | 28 | AA | |
| B18 | A18 | 0.05 | 23 | AA | |
| B19 | A19 | 0.10 | 35 | AA | |
| B20 | A20 | 0.04 | 20 | AA | |
| B21 | A21 | 0.05 | 22 | AA | |
| B22 | A22 | 0.09 | 33 | AA | |
| B23 | A23 | 0.05 | 21 | AA | |
| B24 | A24 | 0.08 | 27 | AA | |
| B25 | A25 | 0.07 | 26 | AA | |
| B26 | A26 | 0.04 | 22 | AA | |
| B27 | A27 | 0.10 | 33 | AA | |
| B28 | A28 | 0.09 | 30 | AA | |

(continued)

| Reference sign | Steel No. | Passive film | | Characteristic evaluation | Type |
|---|---|---|---|---|---|
| | | Composition parameter PS Al/ (Ti + Mn +Si + Cr) | Steel sheet surface coverage (%) | Oxidation resistance | |
| b1 | a1 | 0.02 | 9 | B | Comparative Example |
| b2 | a2 | 0.20 | 45 | B | |
| b3 | a3 | 0.01 | 24 | B | |
| b4 | a4 | 0.02 | 33 | B | |
| b5 | a5 | 0.01 | 35 | B | |
| b6 | a6 | 0.02 | 32 | B | |
| b7 | a7 | 0.02 | 38 | B | |
| b8 | a8 | 0.01 | 39 | B | |
| b9 | a9 | 0.10 | 11 | B | |
| b10 | a10 | 0.02 | 7 | B | |
| b11 | a11 | 0.11 | 13 | B | |

<Example 2>

Cold rolling and the subsequent steps of Steel Nos. A4 to 8, A14, 15, 17 and 18 shown in Table 1 were performed under the conditions of reference signs C1 to C10 and c1 to c6 shown in Table 3, thereby producing steel sheets.

As shown in Table 3, in the reference signs C1 to C10, since the cold rolling and the subsequent production steps, the composition parameter PS of the passive film and the coverage rate of the Al-containing oxide satisfied the conditions of the present invention, the steam oxidation resistance in the water vapor oxidation test was favorable.

In the reference sign c1, since the steel sheet was annealed in the atmosphere having a dew point exceeding -20°C, which is the upper limit, the composition parameter PS of the passive film did not satisfy the scope of the invention, the coverage rate of the Al-containing oxide became less than 15%, and the steam oxidation resistance was poor.

In the reference sign c2, since the steel sheet was annealed at lower than 700°C, which is the lower limit of the soaking temperature, the composition parameter PS of the passive film did not satisfy the scope of the invention, and the coverage rate of the Al-containing oxide was less than 15%, the steam oxidation resistance was poor.

In the reference sign c3, since the steel sheet was annealed at higher than 950°C, which is the upper limit of the soaking temperature, and the coverage rate of the Al-containing oxide exceeded 40%, the steam oxidation resistance was poor.

In the reference sign c4, since the steel sheet was annealed for shorter than five seconds, which is the lower limit of the soaking time, and the coverage rate of the Al-containing oxide was less than 15%, the steam oxidation resistance was poor. "Soaking time of 0 seconds" for the reference sign c4 means that the finish annealing was completed as soon as the soaking temperature was reached.

In the reference sign c5, since the steel sheet was annealed for longer than 600 seconds (10 minutes), which is the upper limit of the soaking temperature, and the coverage rate of the Al-containing oxide exceeded 40%, the steam oxidation resistance was poor.

In the reference sign c6, since salt immersion was performed, the melting and dropping of the Al-containing oxide were accelerated, the coverage rate of the Al-containing oxide became less than 15%, and the steam oxidation resistance was poor.

[Table 3]

| Reference sign | Steel No. | Cold rolling | | Finish annealing | | | | Pickling | | Al-containing oxide having circle-equivalent diameter of 0.01 to 1 $\mu$m | | Characteristic evaluation | Type |
|---|---|---|---|---|---|---|---|---|---|---|---|---|---|
| | | Roll diameter (reverse) | Roll diameter (tandem) | Dew point | Atmosphere $H_2$ + remainder of $N_2$ | Soaking temperature | Soaking time | Electrolysis/ salt + electrolysis | Fluorine ion concentration | Composition parameter PS Al/(Ti + Mn +Si + Cr) | Steel sheet surface coverage | Oxidation resistance | |
| | | (mm) | (mm) | (°C) | (%) | (°C) | (sec) | | (g/L) | | (%) | | |
| C1 | A7 | - | 400 | -21 | 3 | 838 | 225 | Electrolysis | 1.3 | 0.03 | 16 | A | Invention Example |
| C2 | A8 | 100 | - | -49 | 15 | 761 | 64 | Electrolysis | 3.4 | 0.09 | 33 | AA | |
| C3 | A4 | 100 | - | -43 | 3 | 720 | 348 | Electrolysis | 5.9 | 0.04 | 21 | AA | |
| C4 | A5 | - | 400 | -26 | 5 | 930 | 522 | Electrolysis | 9.3 | 0.08 | 31 | AA | |
| C5 | A6 | - | 400 | -32 | 5 | 843 | 10 | Electrolysis | 5.6 | 0.08 | 31 | AA | |
| C6 | A7 | - | 400 | -35 | 10 | 821 | 580 | Electrolysis | 6.1 | 0.10 | 34 | AA | |
| C7 | A14 | 100 | - | -32 | 10 | 843 | 34 | Electrolysis | 3.1 | 0.04 | 22 | AA | |
| C8 | A15 | - | 400 | -35 | 5 | 821 | 103 | Electrolysis | 2.9 | 0.05 | 28 | AA | |
| C9 | A17 | - | 400 | -33 | 3 | 865 | 158 | Electrolysis | 0.5 | 0.03 | 38 | A | |
| C10 | A18 | - | 400 | -37 | 5 | 874 | 127 | Electrolysis | 11.1 | 0.12 | 15 | A | |
| c1 | A7 | - | 400 | -15 | 1 | 739 | 132 | Electrolysis | 2.5 | <u>0.02</u> | <u>12</u> | B | Comparative Example |
| c2 | A5 | 100 | - | -45 | 50 | <u>650</u> | 170 | Electrolysis | 1.2 | <u>0.02</u> | <u>11</u> | B | |
| c3 | A6 | 100 | - | -44 | 25 | <u>1000</u> | 203 | Electrolysis | 5.7 | 0.13 | <u>53</u> | B | |
| c4 | A15 | - | 400 | -20 | 25 | 928 | <u>0</u> | Electrolysis | 2.0 | 0.04 | <u>13</u> | B | |
| c5 | A16 | - | 400 | -36 | 10 | 814 | <u>700</u> | Electrolysis | 1.7 | 0.06 | <u>48</u> | B | |
| c6 | A4 | 100 | - | -32 | 10 | 840 | 14 | <u>Salt + electrolysis</u> | 1.6 | 0.04 | <u>9</u> | B | |

Underlines means that the corresponding values do not satisfy the scope of the present invention.

[Industrial Applicability]

As is clear from the above description, according to the present invention, it is possible to provide a ferritic stainless steel sheet that is suitable for urea SCR systems and has exceptional steam oxidation resistance even without adding a large amount of an expensive alloy element. Particularly, when the ferritic stainless steel sheet of the present invention is applied to a urea SCR system for diesel automobiles, it is possible to produce an exceptional component for a urea SCR system. Production of a urea SCR system using this component makes it possible to significantly contribute to environmental countermeasures.

## Claims

1.   A ferritic stainless steel sheet comprising, as a chemical composition, by mass%:

   C: more than 0% and 0.008% or less,
   Si: 0.01% to 2.50%,
   Mn: 0.01% to 0.50%,
   P: 0.0001% to 0.040%,
   S: 0.001% to 0.010%,
   Al: 0.001% to 2.500%,
   Cr: 10.0% to 25.0%,
   Nb: more than 0% and 0.80% or less,
   Ti: 0.05% to 0.50%,
   V: 0.01 % to 0.15%,
   N: more than 0% and 0.050% or less,
   Ni: 0% to 0.40%,
   Sn: 0% to 0.200%,
   Mo: 0% to 1.40%,
   Cu: 0% to 1.40%,
   B: 0% to 0.0020%,
   Sb: 0% to 0.5%,
   Zr: 0% to 0.5%,
   Co: 0% to 0.5%,
   W: 0% to 0.5%,
   Ta: 0% to 0.100%,
   Mg: 0% to 0.0050%,
   Ca: 0% to 0.0050%,
   Ga: 0% to 0.05%, and
   REM: 0% to 0.1%
   with a remainder containing Fe and an impurity,
   wherein, regarding a passive film present on a surface of a steel sheet, a composition parameter PS represented by a formula (1) is 0.03 or more and 0.15 or less, and
   a surface coverage of an Al-containing oxide having a circle-equivalent diameter of 0.01 to 1.0 $\mu$m in the passive film is 15% to 40%,

$$PS = Al/(Ti + Mn + Si + Cr) \quad \cdots \quad \text{Formula (1)}$$

   here, an element symbol in the formula (1) is a content (mass%) of each element at a depth position at which an A1 amount is maximized in a depth direction of the passive film.

2.   The ferritic stainless steel sheet according to Claim 1, further comprising, in the chemical composition, by mass%, one or more selected from:

   Ni: 0.01% to 0.40%,
   Sn: 0.001% to 0.200%,
   Mo: 0.05% to 1.40%, and
   Cu: 0.05% to 1.40%.

3. The ferritic stainless steel sheet according to Claim 1 or 2, further comprising, in the chemical composition, by mass%, one or more selected from:

   B: 0.0003% to 0.0020%,
   Sb: 0.005% to 0.5%,
   Zr: 0.005% to 0.5%,
   Co: 0.005% to 0.5%,
   W: 0.005% to 0.5%,
   Ta: 0.005% to 0.100%,
   Mg: 0.0001% to 0.0050%,
   Ca: 0.0001% to 0.0050%,
   Ga: 0.001% to 0.05%, and
   REM: 0.001% to 0.1%.

4. A method for producing the ferritic stainless steel sheet according to any one of Claims 1 to 3,
   wherein a thermal treatment is performed with a dew point of an atmosphere set within a range of -50°C to -20°C, a soaking temperature set within a range of 700°C to 950°C and a soaking time set within a range of five seconds or longer and 10 minutes or shorter in a finish annealing step, and, subsequently, electrolytic pickling is performed.

5. The method for producing a ferritic stainless steel sheet according to Claim 4,
   wherein a fluorine ion concentration in a solution that is used in the electrolytic pickling is 1.0 to 10.0 g/L.

## FIG. 1

## FIG. 2

**EP 4 403 659 A1**

<table>
<tr><td colspan="2">INTERNATIONAL SEARCH REPORT</td><td colspan="2">International application No.<br>**PCT/JP2022/017934**</td></tr>
</table>

**A.    CLASSIFICATION OF SUBJECT MATTER**

*C22C 38/00*(2006.01)i; *C21D 9/46*(2006.01)i; *C22C 38/34*(2006.01)i; *C22C 38/60*(2006.01)i; *C25F 1/06*(2006.01)i
FI:    C22C38/00 302Z; C21D9/46 R; C22C38/34; C22C38/60; C25F1/06 B

According to International Patent Classification (IPC) or to both national classification and IPC

**B.    FIELDS SEARCHED**

Minimum documentation searched (classification system followed by classification symbols)

C22C38/00-38/00; C21D9/46; C25F1/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-4384 A (NIPPON STEEL STAINLESS STEEL CORP.) 14 January 2021 (2021-01-14)<br>claims, paragraphs [0001]-[0002], [0034]-[0039], [0074]-[0079], table 1 | 1-5 |
| A | JP 2020-63499 A (NIPPON STEEL STAINLESS STEEL CORP.) 23 April 2020 (2020-04-23)<br>claims, paragraphs [0001]-[0006], [0017], [0067]-[0072], tables 1A, 1B | 1-5 |
| A | JP 2012-112025 A (NIPPON STEEL & SUMIKIN STAINLESS STEEL CORP.) 14 June 2012 (2012-06-14)<br>claims, paragraph [0064], tables 3, 4 | 1-5 |
| A | WO 2016/035241 A1 (JFE STEEL CORP.) 10 March 2016 (2016-03-10)<br>claims, paragraph [0037] | 1-5 |
| A | JP 2018-168415 A (NIPPON STEEL & SUMIKIN STAINLESS STEEL CORP.) 01 November 2018 (2018-11-01)<br>claims, paragraph [0090] | 1-5 |

☑ Further documents are listed in the continuation of Box C.          ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br><br>**22 June 2022** | Date of mailing of the international search report<br><br>**05 July 2022** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

International application No.

**PCT/JP2022/017934**

**C.    DOCUMENTS CONSIDERED TO BE RELEVANT**

| Category* | Citation of document, with indication, where appropriate, of the relevant passages | Relevant to claim No. |
|---|---|---|
| A | WO 2010/010916 A1 (NIPPON STEEL & SUMIKIN STAINLESS STEEL CORP.) 28 January 2010 (2010-01-28)<br>claims, paragraph [0046] | 1-5 |
| A | JP 2015-518087 A (AK STEEL PROPERTIES, INC.) 25 June 2015 (2015-06-25)<br>claims | 1-5 |

Form PCT/ISA/210 (second sheet) (January 2015)

INTERNATIONAL SEARCH REPORT
Information on patent family members

International application No.

**PCT/JP2022/017934**

| Patent document cited in search report | | | Publication date (day/month/year) | Patent family member(s) | | | Publication date (day/month/year) |
|---|---|---|---|---|---|---|---|
| JP | 2021-4384 | A | 14 January 2021 | (Family: none) | | | |
| JP | 2020-63499 | A | 23 April 2020 | (Family: none) | | | |
| JP | 2012-112025 | A | 14 June 2012 | (Family: none) | | | |
| WO | 2016/035241 | A1 | 10 March 2016 | EP | 3153599 | A1 | |
| | | | | claims, paragraph [0038] | | | |
| | | | | US | 2018/0195157 | A1 | |
| | | | | CN | 106661697 | A | |
| JP | 2018-168415 | A | 01 November 2018 | (Family: none) | | | |
| WO | 2010/010916 | A1 | 28 January 2010 | EP | 2316979 | A1 | |
| | | | | claims, paragraph [0046] | | | |
| | | | | US | 2011/0110812 | A1 | |
| | | | | CN | 102099500 | A | |
| JP | 2015-518087 | A | 25 June 2015 | WO | 2013/151992 | A1 | |
| | | | | claims | | | |
| | | | | US | 2013/0294960 | A1 | |
| | | | | CN | 104245990 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021151019 A
- JP 2012112025 A
- JP H05271880 A
- JP 2016023341 A